# FASCICULE DE BREVET EUROPEEN

(11) **EP 2 129 552 B1**
(45) Date de publication et mention de la délivrance du brevet: **26.11.2014**
(21) Numéro de dépôt: 08775724.1
(22) Date de dépôt: 19.03.2008
(51) Int. Cl.: B60R 9/045, B60R 9/00

(54) **DISPOSITIF D'AJUSTEMENT DE BARRES DE TOIT ESCAMOTABLES**
DACHRELING JUSTIEREINRICHTUNG
DEVICE FOR FITTING RETRACTABLE ROOF BARS

(30) Priorité: 30.03.2007 FR 0754174
(43) Date de publication de la demande: 09.12.2009
(73) Titulaire: Renault SAS, 92100 Boulogne Billancourt (FR)
(72) Inventeur: MICHAUD, Guillaume, F-92800 Puteaux (FR)
(86) Numéro de dépôt international: PCT/FR2008/050470
(87) Numéro de publication internationale: WO 2008/132372

(56) Documents cités:
- EP-A- 0 569 295
- DE-A1-102005 029 111
- GB-A- 2 414 219
- US-A- 5 871 130

## Description

La présente invention concerne un dispositif de barres de toit pour véhicule automobile, comprenant des barres de toit longitudinales fixées sur le pavillon du véhicule et des barres transversales escamotables dont une extrémité est articulée sur les barres longitudinales.

Plus particulièrement l'invention concerne un dispositif d'ajustement des barres transversales par rapport aux barres horizontales.

La publication CA 2 531 927 propose un dispositif de barres de toits pour véhicules automobiles tel que décrit précédemment, dans lequel les barres de toit transversales possèdent chacune un dispositif de fixation possédant un plot d'indexation dans un site de fixation des barres longitudinales. Le document DE 102005029111 montre un dispositif de barres de toit présentant les caractéristiques énoncées dans le préambule de la revendication 1 annexée.

Cependant, la distance entre les barres longitudinales peut varier entre les véhicules car le positionnement simultané des deux barres longitudinales sur le pavillon n'est pas possible lors du montage en usine. Un jeu peut donc subsister entre le plot d'indexation du dispositif de fixation d'une barre transversale et le site de fixation d'une barre longitudinale, empêchant ainsi l'introduction du plot d'indexation dans le site de fixation.

Le but de l'invention, est de proposer un dispositif permettant la fixation des barres de toit transversales sur les barres de toits longitudinales malgré les variations de distance créées entre les barres longitudinales lors du montage.

Dans ce but, l'invention propose un dispositif de fixation d'une barre transversale conforme à la revendication 1 annexée.

Le site de fixation des barres longitudinales peut être une ouverture de section carrée dans la barre longitudinale.

Le moyen de positionnement peut être un plot de section rectangulaire qui peut être formé de deux parois parallèles sensiblement planes s'entendant verticalement en dessous du dispositif de fixation (28) et dont la normale est perpendiculaire à l'axe principal selon lequel s'étend la barre transversale.

L'axe longitudinal du plot rectangulaire peut être perpendiculaire à la direction selon laquelle s'étend la barre transversale.

La longueur du plot peut être sensiblement égale à la largeur de l'orifice du site de fixation carré de manière à pouvoir introduire le plot dans l'orifice.

Les barres transversales peuvent posséder une première extrémité articulée sur une barre longitudinale et une seconde extrémité libre comprenant le dispositif de fixation.

L'invention sera désormais décrite dans un exemple en référence aux dessins annexés suivants :
- la figure 1 est une vue d'ensemble du dispositif de barres de toit de l'invention en position escamotée;
- la figure 2 est une vue d'ensemble du dispositif de barres de toit de l'invention en position d'utilisation;
- La figure 3 est une vue en coupe du dispositif de fixation des barres de toit transversales sur les barres de toit longitudinales ;
- La figure 4 est une vue de dessus du dispositif de fixation dans la configuration de la figure 1 ;
- La figure 5 est une vue de dessus du dispositif de fixation dans la configuration de la figure 2;

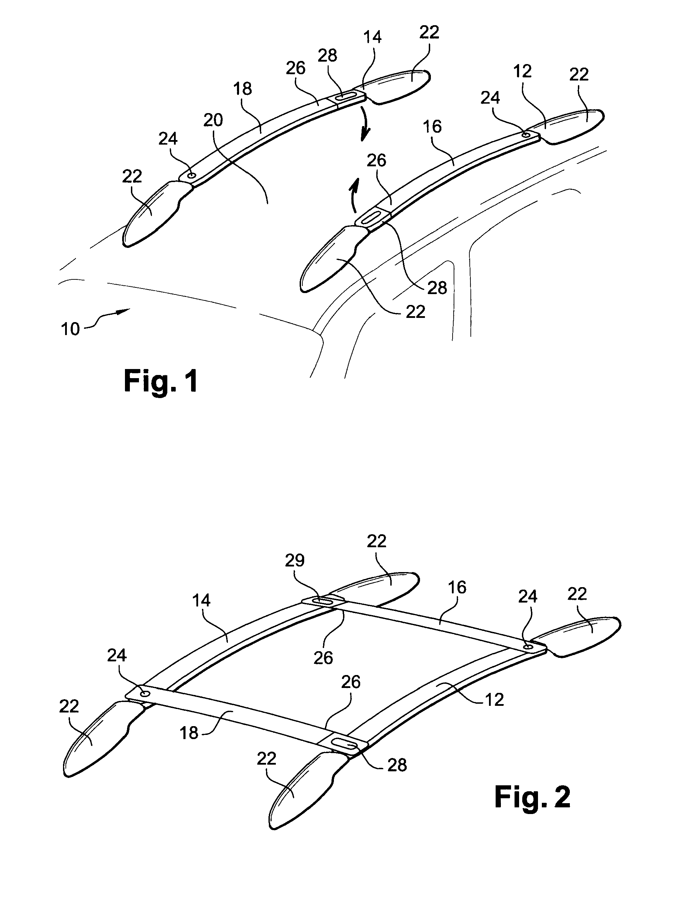

En référence aux figures 1 et 2, un véhicule automobile 10 comporte un dispositif de barres de toit escamotables. Ce dispositif est composé de deux barres longitudinales 12 et 14, et de deux barres transversales 16 et 18. Les barres longitudinales 12 et 14 principalement constituées d'un profilé creux, sont fixées latéralement sur le pavillon 20 du véhicule 10. La fixation de ces barres longitudinales 12, 14 est faite par vissage de chaque extrémité desdites barres longitudinales 12, 14 sur le pavillon 20 du véhicule 10, directement ou à l'aide d'éléments de raccord 22 entre le pavillon 20 et les barres longitudinales 12, 14 comme représenté sur les figures 1 et 2.

Chaque barre transversale 16 et 18 comporte une première extrémité 24 articulée sur une barre longitudinale 12 ou 14 et une seconde extrémité 26 libre comprenant un dispositif de fixation 28. Chaque barre transversale 16 et 18 est donc mobile entre une position escamotée, intégrée le long de la barre longitudinale 12 ou 14 sur laquelle la première extrémité articulée 24 est fixée (Figure 1), et une position active d'utilisation transversale reliant les deux barres longitudinales 12 et 14 dans laquelle la seconde extrémité libre 26 de la barre transversale 16 ou 18 est fixée sur la barre longitudinale opposée 14 ou 12 à celle sur laquelle la première extrémité articulée 24 de la barre transversale est fixée (Figure 2).

L'articulation de la première extrémité 24 de la barre transversale 16 ou 18 peut être montée en translation sur la barre longitudinale 12 ou 14 de manière à obtenir un entraxe variable entre les barres transversales 16 et 18 en position d'utilisation.

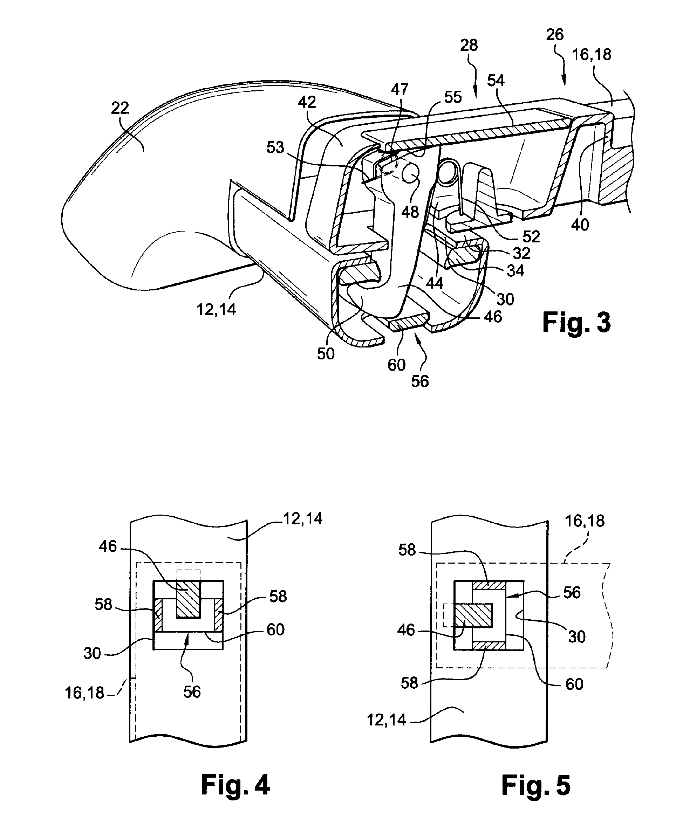

En référence à la figure 3, le dispositif de fixation 28 situé à la seconde extrémité libre 26 de la barre transversale 16 ou 18, est destiné à maintenir la barre transversale 16 ou 18 en position escamotée le long d'une barre longitudinale 12 ou 14 lorsque les barres transversales 16 ou 18 ne sont pas utilisées, ou en position active d'utilisation lorsque les barres transversales 16 et 18 relient les deux barres longitudinales 12 et 14 (Figure 3).

Ce dispositif de fixation 28 coopère donc avec des sites de fixation 30 sur les barres longitudinales 12 et 14. Ces sites de fixation 30 sont des ouvertures de section carrée situées sur la face supérieure 32 de chaque barre longitudinale 12 et 14, au moins deux cotés de ces ouvertures étant parallèles à l'axe longitudinale des barres longitudinales 12 et 14. Chaque barre longitudinale 12 et 14 possède donc au moins une ouverture 30 à l'extrémité opposée à l'articulation 24 de la barre transversale 16 ou 18 afin de pouvoir fixer ladite barre transversale 16 ou 18 en position escamotée, ou afin de pouvoir fixer en position d'utilisation la barre transversale 18 ou 16 articulée sur la barre longitudinale 14 ou 12 opposée.

Dans le cas où l'articulation d'au moins une barre transversale est montée en translation sur une barre longitudinale (non représenté sur les figures), des ouvertures supplémentaires sont disposées le long de la barre longitudinale opposée à celle sur laquelle l'articulation de la première extrémité de la barre transversale est monté en translation, de manière à pouvoir fixer ladite barre transversale en différentes positions d'utilisation.

Les sites de fixation peuvent présenter, en plus de l'ouverture carrée 30, un élément 34 permettant d'améliorer le maintien en position bloquée du dispositif de fixation 28. Cet élément 34 est fixé sur la face intérieure de la barre longitudinale autour de l'ouverture 30 du site de fixation.

Le dispositif de fixation 28, représenté à la figure 3, comprend une première portion 40 de liaison à l'extrémité 26 de la barre transversale 16 ou 18. Dans cet exemple, cette liaison est réalisée par emboîtement de la première portion 40 du dispositif de fixation 28 dans la barre transversale creuse 16 ou 18.

Une seconde portion 42 du dispositif de fixation 28 possède un logement creux 44 débouchant sur les faces supérieure et inférieure du dispositif de fixation 28. Ce logement 44 permet de loger un crochet 46 pivotant autour d'un axe horizontal 48, perpendiculaire à la direction selon laquelle s'étend principalement la barre transversale 16 ou 18. Le crochet 46 comporte une partie supérieure possédant un alésage permettant de monter pivotant le crochet sur l'axe 48, et une partie inférieure possédant un doigt 50 s'étendant sensiblement perpendiculairement au corps du crochet 46.

Un premier ressort 52 est monté entre le crochet 46 et une paroi du logement creux 44 afin de forcer le retour du crochet 46 en position bloqué.

Le crochet 46 est actionné par un levier 54 situé sur la partie supérieure du dispositif de fixation 28, et monté pivotant autour du même axe 48 que le crochet 46. Lors du déplacement du levier 54, sa face inférieure 55 entre en contact avec la face supérieure 47 du crochet 46 permettant ainsi de déplacer le crochet d'une position bloquée à une position débloquée.

Un second ressort 53 est situé entre le levier 54 et le crochet 46, par exemple sur l'axe de rotation 48 de ces deux éléments, de manière à forcer la position de repos du levier 54 lorsque le crochet 46 est en position bloquée, et éviter l'apparition d'un jeu entre ces deux pièces.

En référence aux figures 3 à 5, la face inférieure du dispositif de fixation 28 possède un plot d'ajustage 56 de section rectangulaire. Ce plot d'ajustage 56 comporte deux premières parois 58 sensiblement planes et parallèles s'étendant verticalement en dessous de la seconde portion 42 du dispositif de fixation et dont la normale est perpendiculaire à l'axe principal selon lequel s'étend la barre transversale. Ces parois parallèles 58 sont situées de chaque coté du logement creux 44 comportant le crochet 46, et sont reliées entre elles par une troisième paroi horizontale inférieure 60 située en dessous du crochet 46. Le plot 56 enveloppe donc tout ou une partie du crochet 46 lorsqu'il est en position débloquée.

La distance entre les deux parois parallèles 58 du plot 56 est sensiblement égale à la largeur de l'ouverture carrée 30 des sites de fixation des barres longitudinales 12 et 14, de manière à ce qu'une fois le plot 56 inséré dans l'ouverture 30 les jeux normaux aux parois parallèles 58 soient supprimés.

La largeur des deux parois 58 du plot 56 est inférieure à la largeur l'ouverture carrée 30 des sites de fixation des barres longitudinales 12 et 14. De cette manière, le plot 56 peut être introduit dans le site de fixation 30 malgré la différence de distance pouvant exister entre la première extrémité de la barre transversale et le site de fixation.

Ce dispositif de fixation permet avantageusement de fixer une barre transversale articulée sur une première barre longitudinale sur une seconde barre longitudinale, malgré une légère variation de distance entre les deux barres longitudinales montées en usine par rapport à la distance idéalement définie entre les deux barres longitudinales.

De plus, ce dispositif, bien que permettant un certain jeu crée lors du montage des barres longitudinales sur le pavillon du véhicule, permet d'ajuster en position la barre transversale dans la direction perpendiculaire à celle selon laquelle s'étant ladite barre transversale aussi bien en position escamotée qu'en position active d'utilisation de la barre transversale.

## Revendications

1. Dispositif de barres de toit pour véhicule automobile comprenant deux barres longitudinales (12,14) pouvant être fixées sur le pavillon (20) du véhicule (10), et deux barres transversales (16,18) chacune possédant une première extrémité (24) articulée sur une barre longitudinale (12,14) et une seconde extrémité (26) libre comprenant un dispositif de fixation (28) coopérant avec au moins une ouverture carrée (30) formant un site de fixation situé sur au moins une barre longitudinale (12,14), **caractérisé en ce qu'**une face inférieure du dispositif de fixation (28) comprend un plot d'ajustage (56) de section rectangulaire, ce plot d'ajustage (56) comportant deux premières parois (58) sensiblement planes et parallèles s'étendant verticalement en-dessous du dispositif de fixation et dont la normale est perpendiculaire à l'axe principal selon lequel s'étend la barre transversale (16,18), la distance entre les parois parallèles (58) du plot (56) étant sensiblement égale à la largeur de l'ouverture carrée (30) des sites de fixation des barres longitudinales (12,14), de manière à ce qu'une fois le plot d'ajustage (56) inséré dans l'ouverture (30) les jeux normaux aux parois parallèles (58) sont supprimés, tandis que la largeur des deux parois (58) du plot (56) est inférieure à la largeur de l'ouverture carrée (30) des sites de fixation, de manière que le plot (56) peut être introduit dans l'ouverture (30) malgré la différence de distance pouvant exister entre la première extrémité de la barre transversale et le site de fixation.

2. Dispositif selon la revendication 1, **caractérisé en ce que** l'axe longitudinal du plot (56) rectangulaire est perpendiculaire à la direction selon laquelle s'étend la barre transversale (16,18).

3. Dispositif selon la revendication 1 ou 2, **caractérisé en ce que** les parois parallèles (58) sont reliées entre elles par une paroi horizontale (60).

4. Dispositif selon l'une quelconque des revendications précédentes, **caractérisé en ce que** la longueur du plot (56) est sensiblement égale à la largeur de l'orifice du site de fixation carré de manière à pouvoir introduire le plot dans l'orifice.

## Patentansprüche

1. Dachträgervorrichtung für ein Kraftfahrzeug, die zwei Längsholme (12, 14), die auf dem Dach (20) des Fahrzeugs (10) befestigt werden können, und zwei Querholme (16, 18) enthält, die je ein erstes Ende (24), das an einen Längsholm (12, 14) angelenkt ist, und ein zweites freies Ende (26) besitzen, das eine Befestigungsvorrichtung (28) enthält, die mit mindestens einer viereckigen Öffnung (30) zusammenwirkt, welche eine auf mindestens einem Längsholm (12, 14) befindliche Befestigungsstelle bildet, **dadurch gekennzeichnet, dass** eine Unterseite der Befestigungsvorrichtung (28) einen Justierklotz (56) mit rechtwinkligem Querschnitt enthält, wobei dieser Justierklotz (56) zwei erste im Wesentlichen ebene und parallele Wände (58) aufweist, die sich senkrecht unter der Befestigungsvorrichtung erstrecken und deren Normale lotrecht zur Hauptachse ist, gemäß der sich der Querholm (16, 18) erstreckt, wobei der Abstand zwischen den parallelen Wänden (58) des Klotzes (56) im Wesentlichen gleich der Breite der viereckigen Öffnung (30) der Befestigungsstellen der Längsholme (12, 14) ist, damit, wenn der Justierklotz (56) in die Öffnung (30) eingeführt ist, die normalen Spiele an den parallelen Wänden (58) beseitigt sind, während die Breite der zwei Wände (58) des Klotzes (56) geringer als die Breite der viereckigen Öffnung (30) der Befestigungsstellen ist, damit der Klotz (56) trotz des Abstandsunterschieds, der zwischen dem ersten Ende des Querholms und der Befestigungsstelle existieren kann, in die Öffnung (30) eingeführt werden kann.

2. Vorrichtung nach Anspruch 1, **dadurch gekennzeichnet, dass** die Längsachse des rechtwinkligen Klotzes (56) lotrecht zu der Richtung ist, gemäß der sich der Querholm (16, 18) erstreckt.

3. Vorrichtung nach Anspruch 1 oder 2, **dadurch gekennzeichnet, dass** die parallelen Wände (58) durch eine waagrechte Wand (60) miteinander verbunden sind.

4. Vorrichtung nach einem der vorhergehenden Ansprüche, **dadurch gekennzeichnet, dass** die Länge des Klotzes (56) im Wesentlichen gleich der Breite der Öffnung der viereckigen Befestigungsstelle ist, um den Klotz in die Öffnung einführen zu können.

## Claims

1. Motor vehicle roof bars device comprising two longitudinal bars (12, 14) which can be fixed to the roof (20) of the vehicle (10), and two transverse bars (16, 18) each having a first end (24) articulated to one longitudinal bar (12, 14) and a free second end (26) comprising a fixing device (28) that collaborates with at least one square opening (30) that forms a fixing site situated on at least one longitudinal bar (12, 14), **characterized in that** a bottom face of the fixing device (28) has an adjustment stud (56) of rectangular section, this adjustment stud (56) comprising two substantially planar and parallel first walls (58) extending vertically under the fixing device and of which the normal is perpendicular to the main axis along which the transverse bar (16, 18) extends, the distance between the two parallel walls (58) of the stud (56) being substantially equal to the width of the square opening (30) of the fixing sites of the longitudinal bars (12, 14), so that once the adjustment stud (56) has been inserted into the opening (30), clearances normal to the parallel walls (58) are eliminated, whereas the width of the two walls (58) of the stud (56) is less than the width the square opening (30) of the fixing sites, so that the stud (56) can be introduced into the opening (30) in spite of the difference in distance there may be between the first end of the transverse bar and the fixing site.

2. Device according to Claim 1, **characterized in that** the longitudinal axis of the rectangular stud (56) is perpendicular to the direction in which the transverse bar (16, 18) extends.

3. Device according to Claim 1 or 2, **characterized in that** the parallel walls (58) are joined together by a horizontal wall (60).

4. Device according to any one of the preceding claims, **characterized in that** the length of the stud (56) is substantially equal to the width of the square fixing site orifice so that the stud can be introduced into the orifice.
